(19) Europäisches Patentamt
European Patent Office
Office européen des brevets

(11) **EP 2 402 124 B1**

(12) **EUROPÄISCHE PATENTSCHRIFT**

(45) Veröffentlichungstag und Bekanntmachung des Hinweises auf die Patenterteilung:
**24.10.2018   Patentblatt 2018/43**

(21) Anmeldenummer: **11170327.8**

(22) Anmeldetag: **17.06.2011**

(51) Int Cl.:
***B25J 9/16*** *(2006.01)*

(54) **Verfahren und Vorrichtung zur Bestimmung von Strukturparametern eines Roboters**

Method and device for determining structural parameters of a robot

Procédé et dispositif de détermination de paramètres de structure d'un robot

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2010   DE 102010025601**

(43) Veröffentlichungstag der Anmeldung:
**04.01.2012   Patentblatt 2012/01**

(73) Patentinhaber: **Deutsches Zentrum für Luft- und Raumfahrt e.V.
51147 Köln (DE)**

(72) Erfinder: **Sepp, Wolfgang
80636 München (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
**WO-A2-2008/107715     JP-A- 2003 117 861**

**Beschreibung**

Die Erfindung betrifft ein Verfahren sowie eine Vorrichtung zur Bestimmung von Strukturparametern eines Roboters mit mehreren zueinander lageveränderbaren Robotereiementen.

Die Bestimmung von Strukturparametern eines Roboters erfolgt bisher dadurch, dass mit Hilfe von Messvorrichtungen die Lage des Roboterendeffektors gemessen wird. Hierzu wird ein Messinstrument wie beispielsweise eine Kamera mit dem Roboterendeffektor verbunden. Mit Hilfe des Messinstruments wird ein in der Umgebung des Roboters angeordnetes Kalibrierelement beobachtet. Ebenso ist es möglich, dass das Kalibrierelement wie ein Marker an dem Roboterendeffektor angeordnet ist und ein, in der Umgebung vorgesehenes, Messinstrument das Kalibrierelement beobachtet. Bei Robotern mit mehreren, zueinander lageveränderbaren Roboterelementen, d. h. bei Robotern, die beispielsweise mit Gelenken verbundene Roboterelemente aufweisen, führt eine derartige Bestimmung von Strukturparametern zu ungenauen Ergebnissen. Dies liegt darin begründet, dass sich die Effekte des Drehens und/oder Schwenkens der Roboterelemente zueinander sich in den einzelnen sich unterscheidenden Positionen des Roboterendeffektors nahezu aufheben können, bzw. wegen Elastizitäten oder Spiel der Gelenke oder wegen mangelnder Steifigkeit der verbindenden Struktur unterschiedlich addieren bzw. subtrahieren können. Die Lage des Endeffektors ergibt sich aus der Kombination der relativen Lagen der einzelnen Gelenkachsen, den eingenommenen Gelenkwinkelstellungen, der Gelenkelastizitäten und Struktursteifigkeit. Abhängig von der Anzahl, der kinematischen Anordnung der Gelenke, der Anzahl der Messungen und den eingenommen Roboterpositionen während eines Verfahrens zur Bestimmung von Strukturparametern, sind die Ausrichtungen der Gelenke und die Länge der Segmente nicht zuverlässig bestimmbar.

Die unbekannten Strukturparameter können über eine Minimierung des Fehlers der getätigten Beobachtung von der erwarteten Beobachtung geschätzt werden. In der Praxis wird die Kinematik eines Roboters mit Parametern für ein steifes System beschrieben. Für die Beschreibung der Relativlagen der Drehachsen haben sich die Denavit-Hartenberg (DH) Parameter etabliert. Ein vierdimensionaler Parametervektor gibt hierbei die Orientierung und Entfernung zweier Achsen zueinander an.

In der Roboterkalibrierung werden für verschiedene Posen mittels einer Messvorrichtung die Position und Orientierung eines zum Endeffektor fest stehenden Koordinatensystems bestimmt. Die Strukturparameter werden so optimiert, dass sich die gemessenen Lagen mit dem geringsten Fehler erklären lassen. Fehler der von der Messvorrichtung erwarteten Beobachtung von der getätigten Beobachtung sind jedoch nicht nur auf Parameter einer steifen Struktur zurückzuführen, sonder auch in Elastizitäten, Spiel und der Struktursteifigkeit begründet.

Obwohl die Zuordnung der Beobachtungsfehler allein zu den Parametern eines idealisierten, steifen Roboters nicht möglich ist, wird dieser Fehler fälschlicherweise mit der Korrektur mehrerer Parameter des idealisierten Roboters ausgeglichen.

Mit der Kalibrierung, d.h. mit einem Robotereinsatz vorangehenden Verfahren zur Bestimmung der Strukturparameter, wird zudem der Beobachtungsfehler nur bezüglich der Roboterposen aus dem Trainingsdatensatz minimiert. Werden beim Einsatz des Roboters Positionen angefahren, die nicht im Trainingsdatensatz enthalten sind, können aufgrund des idealisierten Robotermodells und inkorrekter Strukturparameter große Abweichungen von der gedachten Stellung des Endeffektors auftreten. Es ist daher bei diesem Verfahren erforderlich, einen möglichst großen Trainingsdatensatz zu erstellen, d. h. möglichst viele Endeffektor-Positionen anzufahren. Dies ist äußerst zeit- und damit kostenintensiv.

In JP 2003117861 wird ein Roboter mit mehreren Roboterelementen beschrieben, wobei an diesen Roboterelementen Kalibrierelemente angebracht sind. Über Beobachtungseinrichtungen kann die Position der einzelnen Kalibrierelemente nacheinander bestimmt werden. Aus den so bestimmten Positionen der Kalibrierelemente lassen sich die Positionen der Roboterelemente untereinander bestimmen und korrigieren.

Aufgabe der Erfindung ist es, ein Verfahren sowie eine Vorrichtung zur Bestimmung von Strukturparametern eines Roboters zu schaffen, bei dem die Strukturparameter exakter und vorzugsweise auch schneller bestimmt werden können.

Die Lösung der Aufgabe erfolgt erfindungsgemäß durch ein Verfahren gemäß Anspruch 1 bzw. eine Vorrichtung gemäß Anspruch 5.

Bei dem erfindungsgemäßen Verfahren zur Bestimmung von Strukturparametern eines Roboters mit mehreren zueinander lageveränderbaren Roboterelementen wird der Roboter von Kalibrierelementen umgeben. Hierbei handelt es sich bei den Kalibrierelementen vorzugsweise um aktive oder passive Marker. Ebenso kann es sich bei den Kalibrierelementen um charakteristische Elemente, d. h. natürliche Landmarken der Umgebung handeln. Ferner werden zumindest mehrere, vorzugsweise alle Roboterelemente mit Beobachtungseinrichtungen verbunden. Anschließend erfolgt vorzugsweise ein Abschätzen bzw. Bestimmen der Position und/oder der Orientierung der Roboterelemente relativ zu den Kalibrierelementen.

Hierbei ist es beispielsweise ausreichend, dass eine direkte oder indirekte Bestimmung der Position und/oder Orientierung fest mit dem Roboterelement verbundener Einheiten, wie beispielsweise der Beobachtungseinrichtung oder eines Kalibrierelements, erfolgt. Ausgehend von den Beobachtungen der Beobachtungselemente wird sodann beispielsweise zuerst die Position und/oder Orientierung einer fest mit dem Roboterelement verbundenen Einheit (Beobachtungselement oder Kalibrierelement) bestimmt und im darauffolgenden Schritt die Roboterkalibrierung auf Grundlage dieser Positionen und/oder Orientierungen vorgenommen. Ebenso ist es möglich, die Roboterkalibrierung auf der Grundlage der ursprünglichen Beobachtungen der Beobachtungselemente, zum Beispiel der Positionen der Abbildungen der Kalibrierelemente, im Beobachtungsbild vorzunehmen.

Die Orientierung bzw. Lage eines Roboterelements, bzw. die Orientierung/Lage des Koordinatensystems eines Roboterelements, hängt hierbei von den Definitionen ab. Wird das Koordinatensystem eines Roboterelements beispielsweise in CAD definiert, so werden die Positionen und/oder Orientierungen der Roboterelemente in der Regel nicht direkt gemessen.

Ist die Geometrie des Kalibrierkörpers, d.h. die Entfernungen der Kalibrierelemente zueinander bekannt, dann kann die Lage einer Kamera zum Kalibrierkörper mittels Verfahren der nichtlinearen Optimierung geschätzt werden. Dabei werden direkt oder indirekt die perspektivischen Projektionen der Kalibrierelemente ins Bild mit den für eine Lage erwarteten Projektionen in Übereinstimmung gebracht.

Sei

$M = \{m_1, m_2, .., m_N\} \subset \Re^3$ eine dreidimensionale Punktmenge, die den Kalibrierkörper beschreibt,

$B = \{b_1, b_2, .., b_N\} \subset \Re^2$ Menge der beobachteten, zweidimensionalen Bildkoordinaten der Kalibrierelemente $M$

$\hat{m} = (m_x, m_y, m_z, 1)$ homogene Koordinaten des Vektors $m = (m_x, m_y, m_z)$

$\Theta$ intrinsische Kameraparameter, wie z.B. Skalierung, Hauptpunkt, radiale Verzerrungsparameter

$\mu$ 6-dimensionaler Lagevektor, wie z.B. 3 Rotationsparameter und 3 Translationsparameter

$T(^K\mu_M)$ die zum Lagevektor $^K\mu_M$ korrespondierende 4x4 Matrix, die die Starrkörpertransformation dreidimensionaler homogener Koordinaten vom Koordinatensystem $M$ ins Koordinatensystem $K$ realisiert.

$p(\hat{k}, \Theta) \in \Re^2$ projektive Abbildung eines homogenen Punktes $k \in \Re^3$ in Bildkoordinaten unter den intrinsischen Kameraparametern $\Theta$.

$$O(^K\mu_M) = \sum_{i=1}^{N} \left\| p(T(^K\mu_M) * \hat{m}_i, \Theta) - b_i \right\|^2$$ Summe der Fehlerquadrate zwischen den gedachten Bildkoordinaten der Kalibrierelemente $M$ in der Lage $\mu$ und den beobachteten Bildkoordinaten $B$.

$\overline{\mu} = \arg_\mu \min O(\mu)$ Lageparameter des Kalibrierkörpers relativ zur Kamera, welche die Beobachtungen $B$ der Kalibrierelemente $M$ am besten erklären.

In einem Optimierungsverfahren werden die Strukturparameter, möglicherweise einschließlich der Parameter der Massen, der Gelenkelastizität und der Segmentsteifigkeit, bestimmt. Dabei werden die Parameter bestimmt, die die Messungen mehrerer oder aller Roboterelemente erklären. Die Messungen entsprechen hierbei entweder den Beobachtungen im Bild oder abgeleiteten Größen wie z.B. Lage der Kamera relativ zum Kalibrierkörper.

Fallbeispiel:

Roboter mit A Gelenken und einer Anordnung mit A Kameras, wobei die Kameras jeweils an den Segmenten zwischen den Gelenken und dem Endeffektor angebracht sind.

Sei

$Y_j = (\theta_j, d_j, a_j, \alpha_j)$ Denavit-Hartenberg Parameter für Achse j bezüglich Achse j+1

$T(\theta, d, a, \alpha)$ die zu den Denavit-Hartenberg Parametern korrespondierende 4x4 Matrix, die die dreidimensionale Starrkörpertransformation beschreibt.

$\Theta_j$ intrinsische Parameter für Kamera j

$B_j = \{b_{j,1}, b_{j,2}, .., b_{j,N}\} \subset \Re^2$ Menge der in Kamera j beobachteten, zweidimensionalen Bildkoordinaten der Kali-

$$O(\{Y_A, Y_{A-1}, ..., Y_1\}, \{^{KA}\mu_A, ^{KA-1}\mu_{A-1}, .., ^{K1}\mu_1\}, ^1\mu_M) =$$

$$\sum_{j=1}^{A} \sum_{i=1}^{N} \left\| \begin{array}{l} p(T(^{Kj}\mu_j) * T(\theta_{j-1} + \delta_{j-1}, d_{j-1}, a_{j-1}, \alpha_{j-1}) * T(\theta_{j-2} + \delta_{j-2}, d_{j-2}, a_{j-2}, \alpha_{j-2}) * ... \\ ... * T(\theta_1 + \delta_1, d_1, a_1, \alpha_1) * T(^1\mu_M) * \hat{m}_i, \Theta_j) - b_{j,i} \end{array} \right\|^2$$

brierelemente $M$

Summe der Fehlerquadrate zwischen den gemessenen Beobachtungen $B_j$ und den gedachten Beobachtungen für bestimmte Lagen $^{Kj}\mu_j$ des Gelenks j bezüglich der Kamera Kj, den Strukturparametern $Y_j$, der Lage $^1\mu_M$ des Kalibrier-

objekts bezüglich dem Gelenk 1 und den im Falle einer Rotationsachse gemessenen Achswinkeln $\delta_k$.

$$\{\overline{Y}_A, \overline{Y}_{A-1},..., \overline{Y}_1\}, \{^{KA}\overline{\mu}_A, {}^{KA-1}\overline{\mu}_{A-1},.., {}^{K1}\overline{\mu}_1\}, {}^1\overline{\mu}_M =$$

$$\arg\min_{\{Y_A, Y_{A-1},..., Y_1\}, \{^{KA}\mu_A, {}^{KA-1}\mu_{A-1},.., {}^{K1}\mu_1\}, {}^1\mu_M}$$

$$O(\{Y_A, Y_{A-1},..., Y_1\}, \{^{KA}\mu_A, {}^{KA-1}\mu_{A-1},.., {}^{K1}\mu_1\}, {}^1\mu_M)$$

Satz optimaler Struktur- und Lageparameter, die die Beobachtungsfehler mit den geringsten Fehlern erklären.

In bevorzugter Ausführungsform sind sämtliche Kalibrierelemente in der Umgebung des Roboters angeordnet. Dementsprechend sind in dieser bevorzugten Ausführungsform alle Beobachtungselemente mit den entsprechend zu bestimmenden Roboterelementen verbunden.

Alternativ zu den lokal begrenzten Kalibrierelementen können großflächigere Information wie z.B. zwei- oder dreidimensionale Texturen verwendet werden. Alternativ zu den 2D Kameras können auch 3D Kameras verwendet werden. Hierbei entsprechen die Kalibrierelemente geometrisch gut lokalisierbaren dreidimensionalen Objekten oder großflächigeren flächenhafte Beschreibungen.

Die erfindungsgemäße Vorrichtung zur Bestimmung von Strukturparametern eines Roboters mit mehreren zueinander lageveränderbaren Roboterelementen dient in bevorzugter Ausführungsform zur Durchführung des vorstehend beschriebenen, erfindungsgemäßen Verfahrens. Der Roboter weist mehrere zueinander lageveränderbare Roboterelemente auf. Hierbei handelt es sich insbesondere um über dreh- und/oder schwenkbare Gelenke verbundene Roboterarme. Den Roboter umgeben zur Bestimmung der Strukturparameter Kalibrierelemente und/oder Beobachtungselemente, Hierbei handelt es sich bei den Kalibrierelementen wiederum in bevorzugter Ausführungsform um aktive und/oder passive Marker und/oder natürlicher Landmarken. Bei den Beobachtungselementen handelt es sich vorzugsweise um Sensoren, insbesondere bildgebende Elemente wie Kameras. Mit Hilfe einer Auswerteeinrichtung, der die Anordnung bzw. Positionen der Kalibrierelemente bekannt ist, erfolgt eine Auswertung der von den Beobachtungselementen empfangenen Signale, insbesondere der empfangenen Bilder. Die Position und/oder Orientierung der Roboterelemente sowie die Strukturparameter werden so ermittelt bzw. abgeschätzt, als dass die empfangenen Signale oder davon abgeleitete Informationen mit dem geringsten Fehler erklärt werden können.

Aufgrund des erfindungsgemäßen Verfahrens sowie auch der erfindungsgemäßen Vorrichtung ist es möglich, die Strukturparameter genauer zu bestimmen. Dies liegt insbesondere darin begründet, dass bei jeder angefahrenen Roboterposition nicht nur Beobachtungen einer mit dem Endeffektor verbundenen Messvorrichtungen anfallen, sondern zusätzlich Beobachtungen von Messvorrichtungen an einzelnen, vorzugsweise allen Roboterelementen. Das Anfahren einer einzelnen Position führt somit zum Erfassen einer erheblich höheren Anzahl an Beobachtungen und direkt oder indirekt zu einer höheren Anzahl an Positions- und/oder Orientierungsdaten. Dies hat ferner den Vorteil, dass zur Bestimmung der Strukturparameter eine geringere Anzahl an Roboterpositionen angefahren werden muss, sodass die Bestimmung der Strukturparameter schneller und somit kostengünstiger erfolgen kann.

In einer weiteren bevorzugten Ausführungsform des erfindungsgemäßen Verfahrens werden insbesondere monokulare Kameras an vorzugsweise allen beweglichen Roboterelementen fixiert bzw. fest angebracht. Der Roboter wird von einer starren Struktur, wie säulenförmigen Elementen oder dergleichen, umgeben, die die Kalibrierelemente tragen, wobei es sich hierbei insbesondere um passive oder aktive Marker, insbesondere Infrarotmarker, handelt. Anschließend werden von dem Roboter verschiedene Positionen angefahren. Zu insbesondere mehreren unterschiedlichen Zeitpunkten während des Anfahrens einer Position werden von den Kameras vorzugsweise synchron Aufnahmen der Umgebung gemacht. Entsprechende Aufnahmen können auch in Ruhepositionen, insbesondere einer anfänglichen Ruheposition gemacht werden. In den Aufnahmen werden die Kalibrierelemente lokalisiert. Hiermit können, möglicherweise bis auf eine konstante Starrkörpertransformation, die Lagen der Roboterelemente als Vorstufe oder Nebenergebnis der Optimierung der Strukturparameter bestimmt bzw. abgeschätzt werden. Vorzugsweise mittels nicht linearer Optimierung werden die Strukturparameter wie die Kinematik und die Elastizität ermittelt.

In einer weiteren bevorzugten Ausführungsform des erfindungsgemäßen Verfahrens sind an den beweglichen Roboterelementen jeweils mehrere Kameras angebracht. In einer bevorzugten Ausführungsform ist der Sichtbereich der Kameras, die an einem Roboterelement angebracht sind, nicht überlappend. Dies ist z.B. bei Kameras gegeben, die in entgegengesetzte Richtung angeordnet sind.

Nachfolgend wird die Erfindung anhand einer bevorzugten Ausführungsform unter Bezugnahme auf die anliegende Zeichnung näher erläutert.

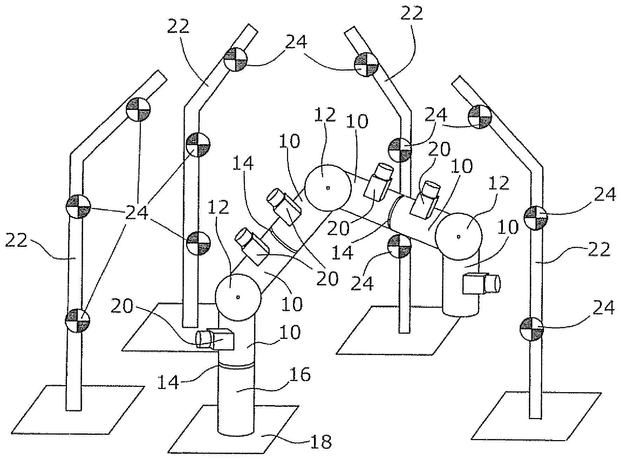

Die Figur zeigt eine schematische perspektivische Ansicht eines Roboters mit mehreren in der Umgebung angeordneten Kalibrierelementen.

Im dargestellten Ausführungsbeispiel weist der Roboter mehrere, in sich vorzugsweise starre Roboterelemente 10 auf. Die Roboterelemente 10 sind über schwenk- und/oder drehbare Gelenke 12 und/oder über Drehelemente 14 miteinander verbunden. Mit dem freien, letzten Roboterelement 10 ist ein nicht dargestellter Endeffektor verbunden. Ferner weist der Roboter ein weiteres stationäres Roboterelement 16 auf, das beispielsweise über eine Bodenplatte 18 fixiert ist und den gesamten Roboter hält.

Im dargestellten Ausführungsbeispiel ist jedes der lageveränderbaren Roboterelemente 10 mit einer Beobachtungseinrichtung in Form einer Kamera 20 verbunden, wobei die Kamera 20 fest an dem entsprechenden Roboterelement fixiert ist.

In der Umgebung des Roboters sind im dargestellten Ausführungsbeispiel stab- oder säulenförmige Halteelemente 22 angeordnet. Die Halteelemente 22 sind stationär. Mit den Halteelementen 22 sind im dargestellten Ausführungsbeispiel jeweils mehrere Kalibrierelemente 24 verbunden. Die Kalibrierelemente 24, bei denen es sich insbesondere um aktive und/oder passive Marker handelt, sind ebenfalls stationär.

Zur Bestimmung von Strukturparametern des Roboters kann der Roboter nun unterschiedliche Gelenkkonfigurationen einnehmen. In den jeweiligen Konfigurationen werden von den Kameras 20 Aufnahmen von der Umgebung gemacht. Anhand der gemachten Aufnahmen können die Raumkoordinaten der Marker 24 bezüglich der Beobachtungselemente bestimmt werden. Hierdurch kann die Position und/oder Orientierung der einzelnen Roboterelemente 10 abgeschätzt werden. Vorzugsweise mit Hilfe nicht linearer Optimierung ist es möglich Strukturparameter wie die Kinematik und die Elastizität zu ermitteln. Zur Durchführung des Verfahrens zur Ermittlung der Strukturparameter sind die Kameras 20 vorzugsweise mit einer nicht dargestellten Auswerteeinrichtung verbunden. Durch die Auswerteeinrichtung erfolgt das Auswerten der aufgenommenen Bilder, das Bestimmen der Position und/oder Orientierung der Roboterelemente 10 sowie das Ermitteln bzw. berechnen der Strukturparameter. Hierbei werden zuerst die Positionen und/oder Orientierungen der Roboterelemente bestimmt und dann erst die Strukturparameter.

**Patentansprüche**

1. Verfahren zur Bestimmung von Strukturparametern eines Roboters mit mehreren zueinander lageveränderbaren Roboterelementen (10), bei welchem

   der Roboter von Kalibrierelementen (24) umgeben wird,
   mehrere Roboterelemente (10) mit Beobachtungseinrichtungen (20) verbunden werden,
   die relative Position und/oder Orientierung der Roboterelemente (10) bestimmt wird und
   die Strukturparameter auf Basis der relativen Position und/oder Orientierung ermittelt werden,**dadurch gekennzeichnet, dass**
   alle Kalibrierelemente (24) den Roboter umgeben und alle Beobachtungselemente (20) mit den Roboterelementen (10) verbunden sind.

2. Verfahren nach Anspruch 1 , bei welchem als Kalibrierelemente (24) aktive und/oder passive Marker verwendet werden.

3. Verfahren nach einem der Ansprüche 1-2, bei welchem die Beobachtungselemente (20) bildgebende Elemente sind.

4. Vorrichtung zur Bestimmung von Strukturparametern eines Roboters mit mehreren zueinander lageveränderbaren Roboterelementen (10), insbesondere nach dem Verfahren gemäß einem der Ansprüche 1-3, mit

   einem mehrere zueinander lageveränderbare Roboterelemente (10) aufweisenden Roboter,
   den Roboter umgebenden Kalibrierelementen (24),
   mit mehreren Beobachtungselementen (20) die jeweils mit einem Roboterelement (10) verbundenen sind und
   einer Auswerteeinrichtung durch die die relative Position und/oder Orientierung der Roboterelemente bestimmt wird und die Strukturparameter direkt und/oder indirekt auf Basis der Beobachtungen der Beobachtungselemente (20) Position und/oder Orientierung ermittelt werden , **dadurch gekennzeichnet, dass** alle Kalibrierelemente (24) den Roboter umgeben und alle Beobachtungselemente (20) mit den Roboterelementen (10) verbunden sind.

5. Vorrichtung nach Anspruch 4, **dadurch gekennzeichnet, dass** als Kalibrierelemente (24) aktive und/oder passive Marker vorgesehen sind.

6. Vorrichtung nach einem der Ansprüche 4 - 5, **dadurch gekennzeichnet, dass** die Beobachtungselemente (20) bildgebende Elemente sind.

**Claims**

1. A method for determining structural parameters of a robot having a plurality of robot elements (10) whose positions relative to each other are changeable, wherein

   said robot is surrounded by calibrating elements (24),
   a plurality of robot elements (10) are connected to observation means (20),
   the relative position and/or orientation of said robot elements (10) is determined, and
   the structural parameters are obtained on the basis of the relative position and/or orientation,
   **characterized in that**
   all calibrating elements (24) surround said robot and all observation elements (20) are connected to said robot elements (10).

2. The method according to claim 1, wherein as calibrating elements (24) active and/or passive markers are used.

3. The method according to any one of claims 1-2, wherein the observation elements (20) are imaging elements.

4. A device for determining structural parameters of a robot having a plurality of robot elements (10) whose positions relative to each other are changeable, in particular in accordance with the method according to any one of claims 1-3, comprising

   a robot including a plurality of robot elements (10) whose positions relative to each other are changeable,
   calibrating elements (24) surrounding said robot,
   a plurality of observation elements (20) respectively connected to one of said robot elements (10), and
   an evaluation means with the aid of which the relative position and/or orientation of said robot elements are determined and the structural parameters are directly and/or indirectly obtained on the basis of the observations of the position and/or orientation by said observation elements (20),
   **characterized in that**
   all calibrating elements (24) surround said robot and all observation elements (20) are connected to said robot elements (10).

5. The device according to claim 4, **characterized in that** as calibrating elements (24) active and/or passive markers are provided.

6. The device according to any one of claims 4-5, **characterized in that** the observation elements (20) are imaging elements.

**Revendications**

1. Procédé de détermination de paramètres de structure d'un robot ayant plusieurs éléments de robot (10) susceptibles d'être déplacés les uns par rapport aux autres, selon lequel

   le robot est entouré d'éléments de calibrage (24),
   plusieurs éléments de robot (10) sont reliés à des dispositifs d'observation (20),
   la position relative et/ou l'orientation des éléments de robot (10) est déterminée et
   les paramètres de structure sont déterminés sur la base de la position relative et/ou de l'orientation,
   **caractérisé en ce que**
   tous les éléments de calibrage (24) entourent le robot et tous les éléments d'observation (20) sont reliés aux éléments de robot (10).

2. Procédé selon la revendication 1, selon lequel des marqueurs actifs et/ou passifs sont utilisés comme éléments de calibrage (24).

3. Procédé selon l'une des revendications 1 à 2, selon lequel les éléments d'observation (20) sont des éléments produisant des images.

4. Dispositif de détermination de paramètres de structure d'un robot ayant plusieurs éléments de robot (10) susceptibles d'être déplacés les uns par rapport aux autres, notamment selon le procédé de l'une des revendications 1 à 3, comportant

   un robot ayant plusieurs éléments de robot (10) susceptibles d'être déplacés les uns par rapport aux autres,

des éléments de calibrage (24) entourant le robot,
avec plusieurs dispositifs d'observation (20) qui sont reliés chacun à un élément de robot (10) et
un dispositif d'exploitation à l'aide duquel la position relative et/ou l'orientation des éléments de robot est déterminée et les paramètres de structure sont déterminés directement et/ou indirectement sur la base des observations des éléments d'observation (20) concernant la position et/ou l'orientation,
**caractérisé en ce que**
tous les éléments de calibrage (24) entourent le robot et tous les éléments d'observation (20) sont reliés aux éléments de robot (10).

5. Dispositif selon la revendication 4, **caractérisé en ce que** des marqueurs actifs et/ou passifs sont utilisés comme éléments de calibrage (24).

6. Dispositif selon l'une des revendications 4 à 5, **caractérisé en ce que** les éléments d'observation (20) sont des éléments produisant des images.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003117861 B